# EUROPEAN PATENT APPLICATION

(11) **EP 4 372 136 A1**
(43) Date of publication of application: **22.05.2024**
(21) Application number: 22208006.1
(22) Date of filing: 17.11.2022
(51) Int. Cl.: D03J 1/00

(54) **WEAVING MACHINE WITH DISPLAY SUPPORT AND METHOD FOR SUPPORTING A DISPLAY**

(71) Applicant: Picanol, 8900 Ieper (BE)
(72) Inventor: Mooren, Jeng, 8953 Wijtschate (BE); Geerardyn, Geert, 8950 Nieuwkerke (BE); Cuvelier, Bram, 9250 Waasmunster (BE)
(74) Representative: Patentanwälte Ruff, Wilhelm, Beier, Dauster & Partner mbB

(57) **Abstract**

The invention relates to a display support (3) for a weaving machine comprising a column (5) and a support rack (6) arranged at an upper end of the column (5), wherein the display support (3) further comprises a fixation part (8), wherein the fixation part (8) is formed integrally with or configured for being fixed to a frame part (2) of the weaving machine, and wherein the column (5) is mounted to the fixation part (8) via at least one damping block (11, 12). The invention further relates to a method for supporting a display (4) and a weaving machine with a display support (3).

## Description

### TECHNICAL FIELD AND PRIOR ART

The invention relates to a display support for a weaving machine. The invention further relates to a method for supporting a display and a weaving machine with a display support.

It is well known to equip modern weaving machines with a display. The display in embodiments is used to visualize data and settings of the weaving machine. In other embodiments, the display is a touch screen and is also used for data input for controlling settings of the weaving machine.

### SUMMARY OF THE INVENTION

It is the object of the present invention to provide a display support for a weaving machine allowing for a secure support of a display. It is a further object to provide a method for supporting a display with such a display support and a weaving machine with such a display support.

According to a first aspect, a display support for a weaving machine comprising a column and a support rack arranged at an upper end of the column is provided, wherein the display support further comprises a fixation part, wherein the fixation part is formed integrally with a frame part of the weaving machine or configured for being fixed to a frame part of the weaving machine, and wherein the column is mounted to the fixation part via at least one damping block.

Throughout this application and the following claims, the indefinite article "a" or "an" means "one or more". In addition, throughout this application and the following claims, the expressions "first" and "second" are only used to distinguish one element from another element and not to indicate any order of the elements.

According to the application, the column of the display support is attached to the frame part of the weaving machine via the fixation part and the at least one damping block. Attaching the column to the frame part allows a stabilization of the column and prevents a bending and/or buckling of the column due to a weight of the display supported by the display support. The at least one damping block prevents or at least reduces a vibration stimulation of the display support due to a vibration of the frame part of the weaving machine to which the display support is attached.

In an embodiment, the column has at least one side arm protruding from the column perpendicular to a longitudinal axis of the column, wherein the at least one damping block is mounted between the at least one side arm and the fixation part. The at least one side arm offers a large degree of design freedom for arranging the at least one damping block between the column and the fixation part. In particular, the at least one side arm allows an arrangement of the damping block between the at least one side arm and a mounting surface of the frame part, which mounting surface extends in parallel to the at least one side arm. In an embodiment, the at least one side arm and the mounting surface extend in a horizontal direction, wherein the at least one side arm, the at least one damping block and the mounting surface allow for a support of the column in a vertical direction.

In an embodiment, the column has a first side arm and a second side arm, the first side arm and the second side arm protruding from the column perpendicular to the longitudinal axis of the column, wherein a first damping block is mounted between the first side arm and the fixation part and a second damping block is mounted between the second side arm and the fixation part. The first side arm and the second side arm in embodiments protrude at opposite sides from the column. In embodiments, the first side arm and the second side arm are arranged in a common plane, wherein the first damping block and the second damping block are identical in design, and wherein the first damping block is arranged between the first arm and a mounting surface of the frame part, which mounting surface extends in parallel to the first side arm, and the second damping block is arranged between the second arm and the mounting surface of the frame part.

In an embodiment, the at least one damping block is mounted between the at least one side arm and the fixation part using a fixation pin extending in parallel to the longitudinal axis of the column. In embodiments, the at least one damping block comprises two coaxially arranged fixation pins and a rubber element arranged between the fixation pins. The fixation pins are fixed to the rubber element using washers. The rubber element isolates the column from vibrations of the frame part stimulated for example by a gripper drive. By mounting the rubber element using fixation pins extending in parallel to the longitudinal axis of the column, the column is supported in the direction of the longitudinal axis of the column via the at least one side arm, the at least one damping block and the frame part. The fixation pins in embodiments are threaded pins, which extend through holes provided in the at least one side arm and the fixation part and can be fixed to the at least one side arm and the fixation part using nuts. In embodiments, the first damping block is mounted between the first side arm and the fixation part using two coaxially arranged first fixation pins extending in parallel to the longitudinal axis of the column, and the second damping block is mounted between the second side arm and the fixation part using two coaxially arranged second fixation pins extending in parallel to the longitudinal axis of the column.

In an embodiment, the fixation part is L-shaped and comprises a first mounting surface extending perpendicular to the longitudinal axis of the column and a second mounting surface extending in parallel to the longitudinal axis of the column, wherein the at least one damping block is arranged between the at least one side arm and the first mounting surface, and wherein the second mounting surface is configured for being fixed to the frame part of the weaving machine. In use, the at least one side arm and the first mounting surface extend in horizontal direction, wherein the at least one side arm, the at least one damping block and the mounting surface allow for a support of the column in vertical direction.

In an embodiment. the second mounting surface is configured for being fixed to the frame part of the weaving machine using two or more bolts. The design of the second mounting surface can be chosen to match the frame part to which it is attached. The number and arrangement of the bolts can be chosen to allow for a stable fixation of the fixation part to the frame part.

In an embodiment, the first mounting surface has a recess, wherein the column is arranged in the recess. This allows for a positioning of the column close to the second mounting surface of the frame part.

In an embodiment, distance bushes can be arranged as transportation aid between the column and the second mounting surface of the fixation part. The distance bushes allow a fixation of the column to the second mounting surface during transport using bolts extending perpendicular to a longitudinal axis of the column. The bolts and the distance bushes are removed in use so that the column is only mounted to the fixation part via the at least one damping block and vibrations of the frame part are not or only marginally transferred to the column and the display.

In an embodiment, a display mounting element is mounted to the support rack so as to be pivotable about a horizontal axis, wherein the support rack is provided with at least one damping element, wherein the display mounting element rests on the at least one damping element in a use position. The at least one damping element further isolates the display mounting element from any vibration of the column and the support rack attached to the column. The at least one damping element and the at least one damping block in embodiments are identical in design. In other embodiments, the at least one damping element and the at least one damping block differ in design in order to achieve an isolation of the display mounting element from vibration stimulations at different frequencies.

In embodiments, the display support further comprises a base element, which base element is provided at a lower end of the column, wherein via the base element the display support can rest on a floor. The display support in embodiments rests on the floor via the base element, wherein the column of the display support is fixed to the frame for an additional stabilization. Preferably, the base element is supported on the floor via several feet, in particular height adjustable levelling feet, such as height adjustable vibration-damping levelling feet. The feet, in particular the vibration-damping levelling feet, resting on the floor avoid or limit a displacement of the column with respect to the floor and prevent or at least reduce vibrations of the display support, in particular stabilize the display support.

In an embodiment, a weight is mounted to the base element for a stabilization of the display support. The additional weight mounted to the base element reduces the sensitivity of the display support to high frequency vibrations and stabilizes the display support. In embodiments, a solid block is provided, which is placed on the base element, in particular a solid metal block.

In embodiments, an aspirator of a dust collection device is used as the weight. The use of the aspirator allows that no additional weight has to be added to the weaving machine. Further, in this case the aspirator can be mounted separately from the weaving machine frame and above the floor. Due to this the aspirator can be isolated from a vibration of the weaving machine frame.

In an embodiment, the column comprises at least a first column part and a second column part, which can be secured to each other at different mutual positions, so that a length of the column can be adjusted. Preferably, the column comprising the column parts is telescopic. In embodiments, a length of the column is variable only for transport purposes, wherein in use the first column part and the second column part are secured to each other at a specified length. The specified length of the column in embodiments can be specified by a user during a set-up of the weaving machine. This allows that a length of the column is specified during set-up such that the lower end of the column either directly or, if applicable, via the base element, contacts a floor. In embodiments, a length is specified such that the lower end is slightly pressed against the floor.

According to a second aspect, a method for supporting a display for a weaving machine using a display support with a column and a fixation part is provided, wherein the method comprises mounting the column to the fixation part via at least one damping block. Mounting the column to the fixation part allows a stabilization of the display support, wherein the at least one damping block isolates the display support from vibrations of the frame part. In embodiments, the column is mounted to the fixation part during manufacturing and before the weaving machine with the display support leaves a factory. In this case, in embodiments, distance elements, in particular distance bushings, can be arranged as transportation aid between the column and the fixation part in order to avoid or limit a displacement of the column with respect to the frame part during transport. Further, in embodiments, the column comprises at least a first column part and a second column part, which can be secured to each other at different mutual positions so that a length of the column can be adjusted. In this case, for a transport, the first column part and the second column part can be arranged in a transport position, in which transport position a length of the column is reduced, and during set-up of the weaving machine for weaving the first column part and the second column part are arranged in a selected use position, such that a lower end of the display support rests securely on a floor or is slightly pressed onto the floor either directly or, if applicable, via a base element.

According to a third aspect, a weaving machine comprising a frame and a display support mounted to a frame part of the frame is provided.

### BRIEF DESCRIPTION OF THE DRAWINGS

In the following, an embodiment of the invention is described in detail based on several schematic drawings in which:
- Fig. 1: shows a perspective view of a section of a weaving machine with a display support mounted to a frame part of the weaving machine, which display support comprises a column and a fixation part;
- Fig. 2: shows the display support of Fig. 1 and a section of the weaving machine in another perspective view;
- Fig. 3: shows the display support of Fig. 2 in an exploded view;
- Fig. 4: shows a detail of Fig. 4 in enlarged scale;
- Fig. 5: shows the display support of Fig. 1 and a section of the weaving machine, wherein the display is pivoted about a horizontal axis into a maintenance position;
- Fig. 6: shows the display support of Fig. 1 and a section of the weaving machine, wherein in addition distance bushes are arranged as transportation aid between the column and the fixation part;
- Fig. 7: shows the display support of Fig. 1 and a section of the weaving machine, wherein in addition distance bushes are arranged between the column and the fixation part, while the column is mounted on the floor; and
- Fig. 8: shows a section of a weaving machine with a second embodiment of a display support mounted to a frame part of the weaving machine, which display support comprises a column and a fixation part.

### DETAILED DESCRIPTION OF AN EMBODIMENT

Throughout the drawings, the same elements will be denoted by the same reference numerals.

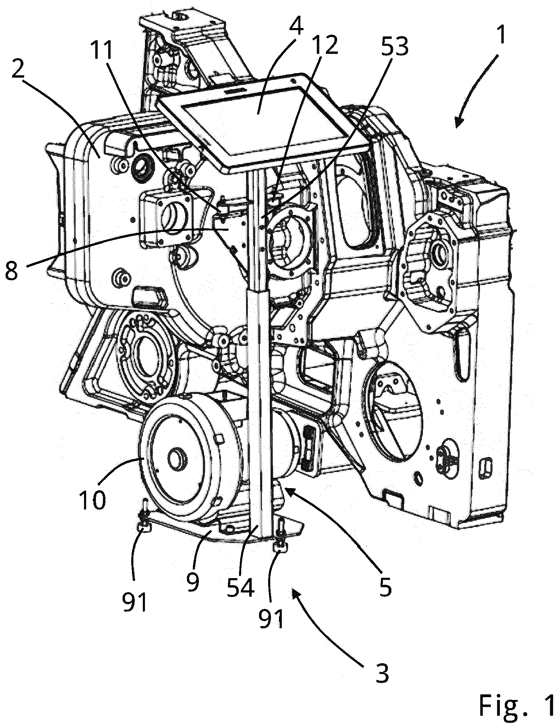

Fig. 1 shows a frame 1 of a weaving machine comprising several frame parts including a frame part 2 used as a gripper drive frame part at an insertion side of the weaving machine. Fig. 1 further shows a display support 3 mounted to the frame part 2, wherein a display 4 is supported by the display support 3.

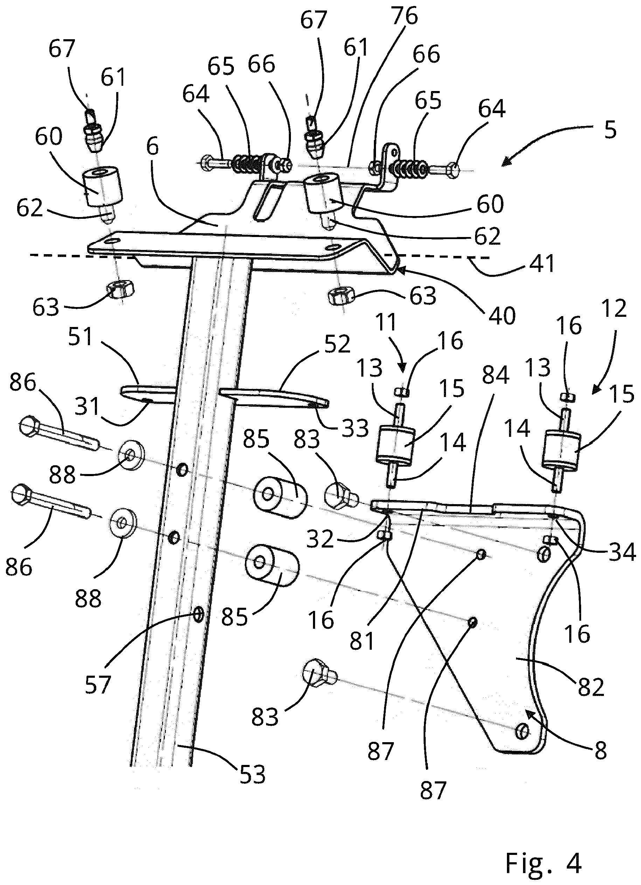

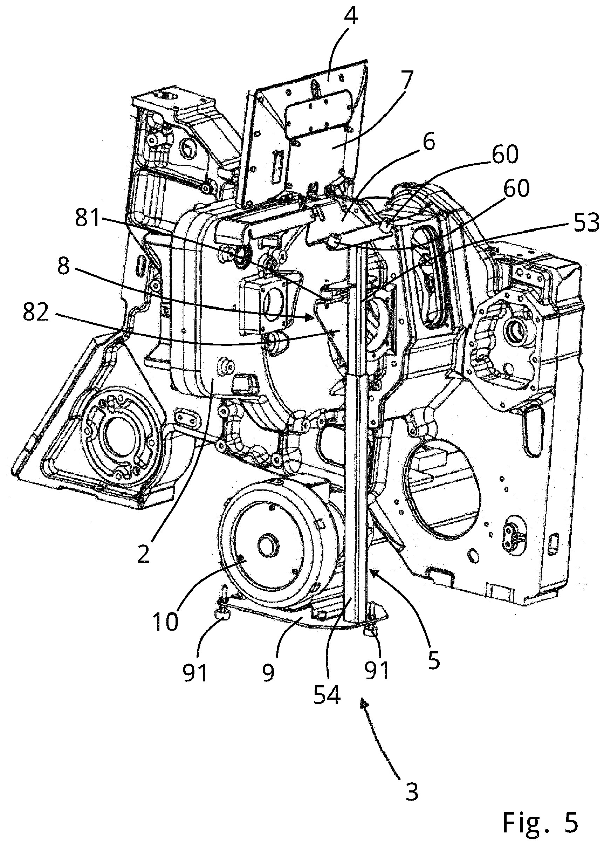

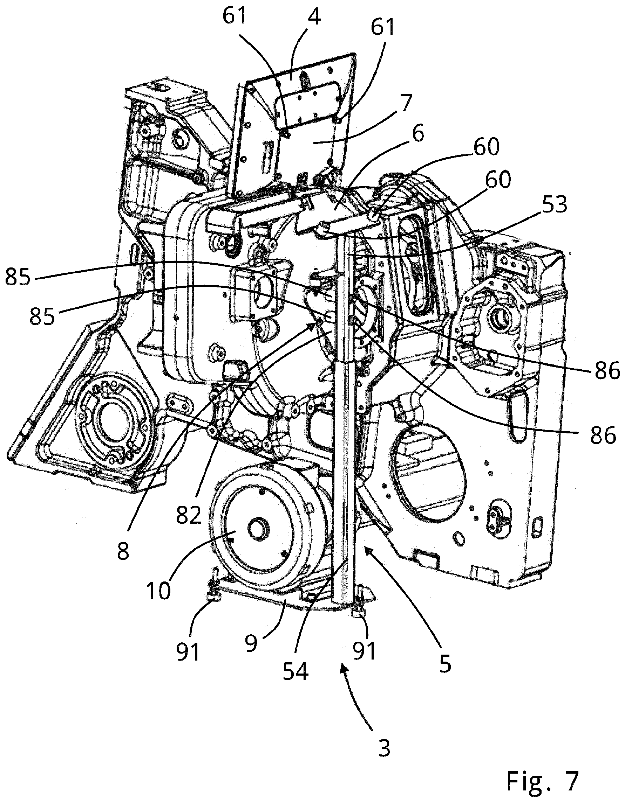

As best seen in Figs. 5 and 7, the display support 3 comprises a column 5, a support rack 6, a display mounting element 7 fixed to the display 4 and mounted to the support rack 6 so as to be pivotable about a horizontal axis 76 (see Fig. 4), a fixation part 8, and a base element 9.

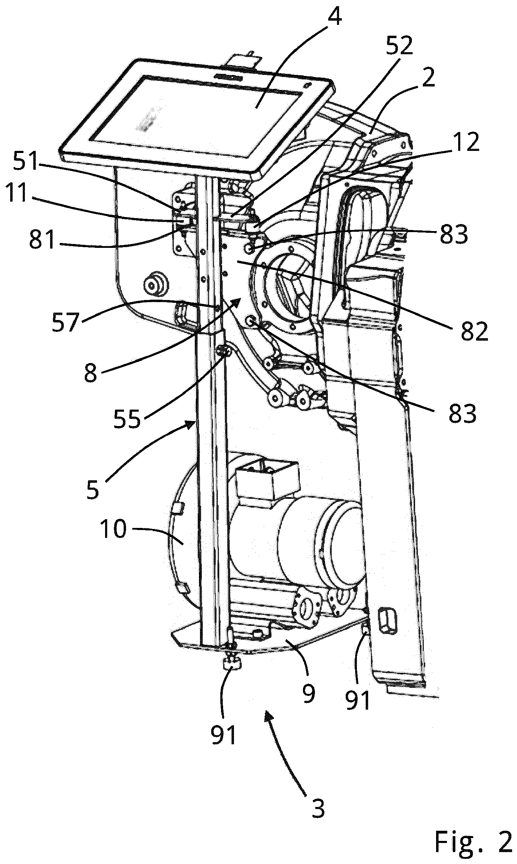

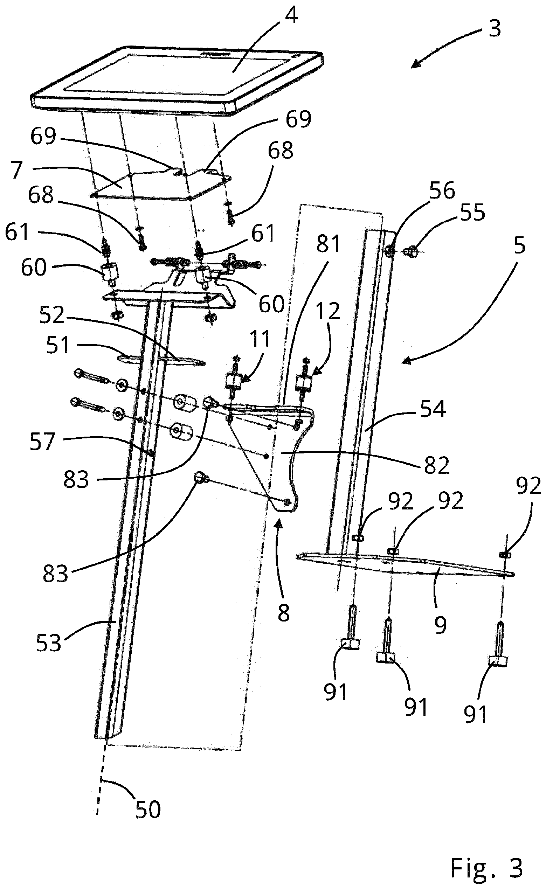

As shown in Figs. 1 and 2, the base element 9 is provided at a lower end of the column 5. The base element 9 can be supported on a floor via several feet 91, such as height adjustable levelling feet. In the embodiment shown in Fig. 3, the base element 9 is supported on the floor via three height adjustable vibration-damping levelling feet 91, for example feet provided with a bottom part made of rubber.

In the embodiment shown in Fig. 1, an aspirator 10 of a dust collection device is mounted to the base element 9 to stabilize the display support 3. In other embodiments, instead of an aspirator a different heavy element of the weaving machine and/or a solid block are mounted to the base element 9.

As shown in Fig. 2, and in the explosive views of Figs. 3 and 4, the fixation part 8 is fixed to the frame part 2 using bolts 83. The column 5 of the display support 3 is mounted to the fixation part 8 via at least one damping block 11, 12, in the embodiment shown via a first damping block 11 and a second damping block 12. By mounting the column 5 to the fixation part 8, the display support 3 is stabilized in position, wherein the damping blocks 11, 12 isolate the display support 3 from vibrations of the frame part 2.

In the embodiment shown, the column 5 has a first side arm 51 and a second side arm 52, wherein the first side arm 51 and the second side arm 52 protrude from the column 5 perpendicular to a longitudinal axis 50 of the column 5. More particular, the first side arm 51 and the second side arm 52 are arranged in a common horizontal plane and protrude from the column 5 at opposite sides of the column 5.

The fixation part 8 is L-shaped and comprises a first mounting surface 81 and a second mounting surface 82. The first mounting surface 81 extends perpendicular to the longitudinal axis 50 of the column 5 and in use in parallel to the first side arm 51 and the second side arm 52. The first mounting surface 81 has a recess 84, wherein the column 5 is arranged in the recess 84 with the first side arm 51 and the second side arm 52 arranged above the first mounting surface 81 at opposite sides of the recess 84.

The second mounting surface 82 extends in parallel to the longitudinal axis 50 of the column 5 and is fixed to the frame part 2 of the weaving machine using the bolts 83.

The first mounting surface 81 extends perpendicular to the longitudinal axis 50 of the column 5 and in parallel to the first side arm 51 and the second side arm 52, wherein the first damping block 11 is arranged between the first side arm 51 and the first mounting surface 81, and wherein the second damping block 12 is arranged between the second side arm 52 and the first mounting surface 81. Hence, the column 5 is supported on the frame part 2 in the direction of its longitudinal axis 50 via the first side arm 51 and the second side arm 52, the first damping block 11 and the second damping block 12 and the fixation part 8, wherein a transmission of vibrations from the frame part 2 to the column 5 is prevented or at least reduced.

As best seen in Figs. 3 and 4, in the embodiment shown, the damping blocks 11, 12 comprise two coaxially arranged fixation pins 13, 14 and a damping element 15, for example a rubber or synthetic damping element, arranged between the fixation pins 13, 14. The first damping block 11 is mounted to the first side arm 51 via a fixation pin 13 which extends through a hole 31 in the first side arm 51 and to the first mounting surface 81 of the fixation part using a fixation pin 14, which extend through a hole 32 in the first mounting surface 81 coaxially to the hole 31 in the first side arm 51. Likewise, the second damping block 12 is mounted to the second side arm 52 via a fixation pin 13 which extends through a hole 33 in the second side arm 52 and to the first mounting surface 81 of the fixation part 8 using a fixation pin 14, which extend through a hole 34 in the first mounting surface 81 coaxially to the hole 33 in the second side arm 52. The fixation pins 13 in the embodiment shown are threaded pins, which are secured in the holes using nuts 16.

As will be understood by comparison of Figs. 1 and 5, in the embodiment shown the display mounting element 7 fixed to the display 4 is mounted to the support rack 6 so as to be pivotable about the horizontal axis 76 (see Fig. 4). In the use position shown in Fig. 1, the display mounting element 7 rests on damping elements 60 (see Fig. 4) mounted to the support element 6. As shown in Fig. 4, the damping elements 60 can cooperate with positioning elements 61 fixed to the display mounting element 7 for positioning the display 4 with respect to the support rack 6 and can be fixed to the support rack 6 using pins 62 and nuts 63. The display mounting element 7 is further mounted to the support rack 6 via bolts 64 and nuts 66. The mounting element 7 comprises folds 69 (see Fig. 4) for cooperating with the bolts 64. Further, spring elements 65 are provided for forcing the display mounting element 7 into the open position shown in Fig. 7. The bolts 64 define the horizontal axis 76. The display 4 is fixed to the mounting element 7 via threaded ends 67 of the positioning elements 61 and the bolts 68, and threaded holes (not shown) in the mounting element 7.

As best seen in Fig. 4, the support rack 6 shown comprises a guideway 40 for guiding along the support rack 6 waste threads produced by the weaving machine, in particular for guiding a waste ribbon 41 of selvage waste threads as shown schematically in Fig. 4.

In the embodiment shown, the column 5 is telescopic and comprises a first part 53 and a second part 54, which can be mutually secured to each other at different longitudinal positions so that the length of the column 5 can be set and fixed by means of a fixation element 55, such as a bolt cooperating with a threaded part 56 fixed to the second column part 54.

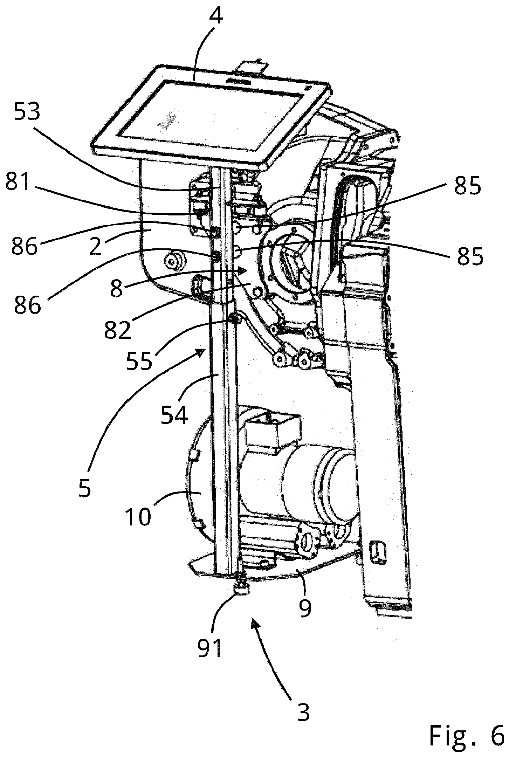

In an embodiment, for a transport of a weaving machine comprising the frame 1, for example when the weaving machine leaves a production factory, the first column part 53 and the second column part 54 are arranged in a transport position shown in Fig. 6 and secured in this transport position using the fixation element 55. As best seen in Figs. 2 and 3, the fixation element 55 can cooperate with a hole 57 in the first column part 53. The column 5, more particular the first column part 53 of the column 5, is further secured to the fixation part 8 using two bolts 86 and distance bushes 85 arranged as transportation aid between the first column part 53 of the column 5 and the second mounting surface 82 of the fixation part 8. The bolts 86 can cooperate with threaded holes 87 in the fixation part 8, and washers 88 can be provided.

In order to allow for an easy access to the frame part 2 and/or the display support 3 during an installation, the display mounting element 7 as shown in Fig. 6 can be pivoted into an open or installation position shown in Fig. 7. The fixation element 55 can be loosened and the second column part 54 can be shifted with respect to the first column part 53 into a use position as shown in Fig. 1, so that the base element 9 with its feet 91 is supported on the floor, preferably is pressed onto the floor. In this use position the feet 91 can be set in a levelling position and be fixed with nuts 92 (see Fig. 3) to the base element 9, and the first column part 53 and the second column part 54 of the column 5 can be secured to each other using the fixation element 55. Then the bolts 86 and the distance bushes 85 can be removed, so that the column 5 is supported by the damping blocks 11 and 12 and via the base element 9, wherein the damping blocks 11, 12 isolate the display support 3 from vibrations of the frame part 2.

In an alternative, for an installation, first the bolts 86 and the distance bushes 85 are removed and then the second column part 54 is shifted with respect to the first column part 53, so that the base element 9 is supported on the floor, in particular supported on its feet 91 that are set in a levelling position.

After installation, the display support 3 is supported on the floor and in addition is supported by its attachment to the frame part 2 via the damping blocks 11, 12. This allows to secure the display 4 in position in a stable manner and isolated from vibrations of the weaving machine.

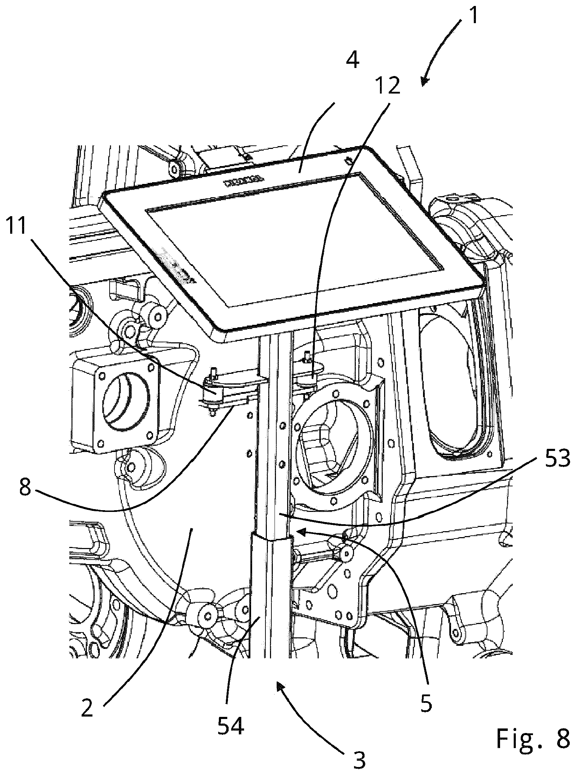

Fig. 8 shows a second embodiment of a display support 3 mounted to a frame part 2 of the weaving machine. The display support 3 also comprises a column 5 and a fixation part 8.

As shown in Fig. 8, the fixation part 8 in this embodiment is formed integrally with the frame part 2. The fixation part 8 shown is designed as a rib provided at the frame part 2, which rib can have a shape similar as the first mounting surface 81 of the embodiment shown in Figs. 1 to 7. The rib can be casted together with the frame part 2, for example casted in cast iron.

On the frame 1, the frame part 2, the column 5, the support rack 6, the display mounting element 7, the fixation part 8 and other elements of the weaving machine, electrical grounds (not shown) can be provided to all elements to electrically ground the elements.

## Claims

1. A display support for a weaving machine comprising a column (5) and a support rack (6) arranged at an upper end of the column (5), wherein the display support (3) further comprises a fixation part (8), **characterized in that** the fixation part (8) is formed integrally with or configured for being fixed to a frame part (2) of the weaving machine, and wherein the column (5) is mounted to the fixation part (8) via at least one damping block (11, 12).

2. The display support according to claim 1, wherein the column (5) has at least one side arm (51, 52) protruding from the column (5) perpendicular to a longitudinal axis (50) of the column (5), and wherein the at least one damping block (11, 12) is mounted between the at least one side arm (51, 52) and the fixation part (8).

3. The display support according to claim 2, wherein the column (5) has a first side arm (51) and a second side arm (52), the first side arm (51) and the second side arm (52) protruding from the column (5) perpendicular to the longitudinal axis (50) of the column (5), and wherein a first damping block (11) is mounted between the first side arm (51) and the fixation part (8) and a second damping block (12) is mounted between the second side arm (52) and the fixation part (8).

4. The display support according to claim 2 or 3, wherein the at least one damping block (11, 12) is mounted between the at least one side arm (51, 52) and the fixation part (8) using a fixation pin (13, 14) extending in parallel to the longitudinal axis (50) of the column (5).

5. The display support according to claim 2 or 3, wherein the fixation part (8) is L-shaped and comprises a first mounting surface (81) extending perpendicular to the longitudinal axis (50) of the column (5) and a second mounting surface (82) extending in parallel to the longitudinal axis (50) of the column (5), wherein the at least one damping block (11, 12) is arranged between the at least one side arm (51, 52) and the first mounting surface (81), and wherein the second mounting surface (82) is configured for being fixed to the frame part (2) of the weaving machine.

6. The display support according to claim 5, wherein the second mounting surface (82) is configured for being fixed to the frame part (2) of the weaving machine using two or more bolts (83).

7. The display support according to claim 5 or 6, wherein the first mounting surface (81) has a recess (84), wherein the column (5) is arranged in the recess (84).

8. The display support according to claim 5, 6 or 7, wherein distance bushes (85) can be arranged as transportation aid between the column (5) and the second mounting surface (82) of the fixation part (8).

9. The display support according to any one of claims 1 to 8, wherein a display mounting element (7) is mounted to the support rack (6) so as to be pivotable about a horizontal axis (76), wherein the support rack (6) is provided with at least one damping element (60), and wherein the display mounting element (7) rests on the at least one damping element (60) in a use position.

10. The display support according to any one of the claims 1 to 9, wherein a base element (9) is provided at a lower end of the column (5), wherein via the base element (9) the display support (3) can rest on a floor.

11. The display support according to claim 10, wherein the base element (9) is supported on the floor via several feet (91), in particular height adjustable levelling feet, in particular height adjustable vibration-damping levelling feet.

12. The display support according to any one of claims 1 to 11, wherein the column (5) comprises at least a first column part (53) and a second column part (54), which can be secured to each other at different mutual positions so that a length of the column (5) can be adjusted.

13. The display support according to any one of claims 1 to 12, wherein a weight is mounted to the base element (9) for a stabilization of the display support (3), in particular wherein an aspirator (10) of a dust collection device is used as the weight.

14. A method for supporting a display for a weaving machine using a display support (3) according to any one of claims 1 to 13 comprising the column (5) and the fixation part (8), **characterized in that** the method comprises mounting the column (5) to the fixation part (8) via at least one damping block (11, 12).

15. A weaving machine comprising a frame (1) and a display support (3) according to any one of claims 1 to 13 mounted to a frame part (2) of the frame (1).
